# EUROPEAN PATENT APPLICATION

(11) **EP 2 397 889 A1**
(43) Date of publication of application: **21.12.2011**
(21) Application number: 09839980.1
(22) Date of filing: 25.12.2009
(51) Int. Cl.: G02F 1/1343, G02F 1/1337

(54) **LIQUID CRYSTAL DISPLAY DEVICE**

(30) Priority: 10.02.2009 JP 2009028851
(71) Applicant: Sharp Kabushiki Kaisha, Osaka-shi, Osaka 545-8522 (JP)
(72) Inventor: HASHIMOTO, Yoshito, Osaka-shi, Osaka 545-8522 (JP); OHGAMI, Hiroyuki, Osaka-shi, Osaka 545-8522 (JP); KUBOKI, Ken, Osaka-shi, Osaka 545-8522 (JP)
(74) Representative: Müller - Hoffmann & Partner
(86) International application number: PCT/JP2009/007248
(87) International publication number: WO 2010/092658

(57) **Abstract**

A high image quality liquid crystal display device having a high viewing angle characteristic is provided. The liquid crystal display device according to the present invention is of a vertical alignment type and includes a plurality of pixels. The liquid crystal display device includes a first polarizing plate having an absorption axis extending in a first direction; a second polarizing plate having an absorption axis extending in a second direction perpendicular to the first direction; a pixel electrode located in each of the plurality of pixels and including a first subpixel electrode and a second subpixel electrode to which different levels of voltage can be applied; a counter electrode facing the pixel electrode; and a liquid crystal layer provided between the pixel electrodes and the counter electrode. The first subpixel electrode includes a plurality of branch electrodes extending in an identical direction, which is a third direction different from a direction inclined by 45° with respect to the first direction or the second direction.

## Description

### TECHNICAL FIELD

The present invention relates to a liquid crystal display device, and specifically to a vertical alignment type liquid crystal display device having a plurality of alignment domains in a pixel.

### BACKGROUND ART

Currently, as liquid crystal display devices having a wide viewing angle characteristic, the following liquid crystal display devices have been developed, for example: liquid crystal display devices using an IPS (In-Plane-Switching) mode or an FFS (Fringe Field Switching) mode, which are transverse horizontal electric field modes, and liquid crystal display devices using a VA (Vertical Alignment) mode.

VA-mode liquid crystal display devices include, for example, liquid crystal display devices of an MVA (Multidomain Vertical Alignment) mode in which a plurality of domains having different alignment directions of liquid crystal molecules are formed in one pixel, and liquid crystal display devices of a CPA (Continuous Pinwheel Alignment) mode in which the alignment direction of liquid crystal molecules is continuously varied around a rivet or the like formed on an electrode at the center of the pixel.

An example of MVA-mode liquid crystal display device is described in Patent Document 1. In the liquid crystal display device described in Patent Document 1, alignment control means extending in two directions perpendicular to each other is provided. Owing to this, four liquid crystal domains are formed in one pixel in which the azimuthal angle of directors which are representative of the respective liquid crystal domains is 45° with respect to polarization axes (transmission axes) of a pair of polarizing plates placed in crossed Nicols. Where the azimuthal angle of 0° corresponds to the direction of the polarization axis of one of the polarizing plates and the counterclockwise direction is the positive direction, the azimuthal angles of the directors of the four liquid crystal domains are 45°, 135°, 225°, and 315°. Such a structure in which four domains are formed in one pixel is referred to as the "4-domain alignment structure" or simply as the "4D structure".

Another examples of MVA-mode liquid crystal display devices are described in Patent Documents 2 and 3. The liquid crystal display device described in Patent Document 2 includes pixel electrodes having many tiny slits (cutouts) extending in the 45°-225° direction and the 135°-315° direction (such pixel electrodes are referred to as the "comb-shaped pixel electrodes" or "fishbone-like pixel electrodes"). The 4-domain alignment structure is realized by aligning liquid crystal molecules to be parallel to these slits. Patent Document 3 describes, for example, a liquid crystal display device in which domain control means controls the alignment directions of liquid crystal molecules with respect to the polarization axes to 45° and to other directions, and a liquid crystal display device in which the direction or the width of the slits is gradually varied in order to slowly vary the alignment direction of the liquid crystal molecules among domains.

Patent Document 4 describes a liquid crystal display device in which each pixel includes a plurality of subpixel electrodes to which different levels of voltage can be applied, in order to improve the viewing angle dependence of the γ characteristic.

### CITATION LIST

### PATENT LITERATURE

Patent Document 1: Japanese Laid-Open Patent Publication No. 11-242225
Patent Document 2: Japanese Laid-Open Patent Publication No. 2003-149647
Patent Document 3: Japanese Laid-Open Patent Publication No. 2007-249243
Patent Document 4: Japanese Laid-Open Patent Publication No. 2008-225491

### SUMMARY OF INVENTION

### TECHNICAL PROBLEM

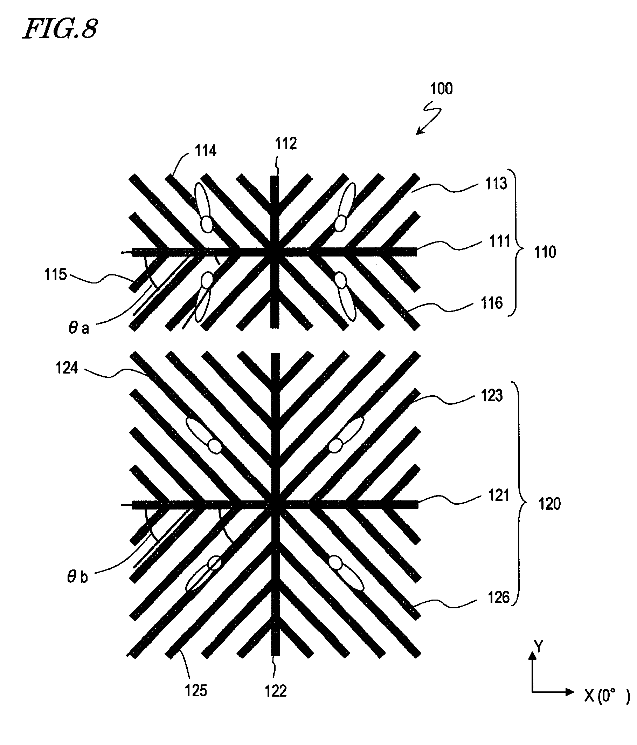

FIG. **8** schematically shows a liquid crystal display device **100** in which pixels each include a pixel electrode including a plurality of subpixel electrodes; specifically FIG. **8** schematically shows an example of subpixel electrodes of a fishbone type. The liquid crystal display device 100 is a vertical alignment type liquid crystal display device including a liquid crystal material having a negative dielectric anisotropy. As shown in FIG. **8****,** the pixel electrode in the liquid crystal display device **100** includes two subpixel electrodes **110** and **120.**

The subpixel electrode **110** includes a trunk electrode **111** extending in the left-right direction in the figure (X direction) and a trunk electrode **112** extending in the top-bottom direction in the figure (Y direction). Hereinafter, in order to define directions (directions of azimuthal angles) in a plane of the pixel electrode, the rightward (in the figure) direction from the center of the intersection of the trunk electrode **111** and the trunk electrode **112** will be referred to as the "0° direction", and azimuthal angles are defined counterclockwise. Namely, the trunk electrode **111** extends in the 0°-180° direction, and the trunk electrode **112** extends in the 90°-270° direction. The subpixel electrode **110** further includes a plurality of branch electrodes **113,** a plurality of branch electrodes **114,** a plurality of branch electrodes **115,** and a plurality of branch electrodes **116** respectively extending in the 45° direction, the 135° direction, the 225° direction and the 315° direction from the trunk electrode **111** or **112.**

The subpixel electrode **120** includes a trunk electrode **121** extending in the 0°-180° direction, a trunk electrode **122** extending in the 90°-270° direction, and also branch electrodes **123,** branch electrodes **124,** branch electrodes **125** and branch electrode **126** respectively extending in the 45° direction, the 135° direction, the 225° direction and the 315° direction from the trunk electrode **121** or **122.**

The liquid crystal display device includes two polarizing plates located in crossed Nicols while having a liquid crystal layer interposed therebetween. One of the two polarizing plates has an absorption axis extending in the 0°-180° direction (X direction), and the other polarizing plate has an absorption axis extending in the 90°-270° direction (Y direction). In the absence of a voltage applied to the liquid crystal layer, black display is provided. When a voltage is applied to the liquid crystal layer, the polarization direction of incident light is rotated by the aligned liquid crystal molecules to provide white display.

In order to improve the utilization efficiency of light, it is preferable to align the liquid crystal molecules in directions of azimuthal angle of 45° (directions which are different by 45°) with respect to the absorption axes at the time of voltage application. Therefore, in the liquid crystal display device described in Patent Document 1, the directions in which the domain control means extends are set to be different by 45° from the absorption axes. In the liquid crystal display devices described in Patent Documents 2 and 3, the directions in which the branch electrodes of the pixel electrode extend are set to be different by 45° from the absorption axes.

However, as a result of careful observations of the alignment directions of the liquid crystal molecules in the liquid crystal display devices **100** including such subpixel electrodes **110** and **120,** the present inventors found that a part of the liquid crystal molecules is not aligned in the 45° direction with respect to the absorption axes. Specifically, it was found that as shown in FIG. **8****,** the liquid crystal molecules on an upper part of the subpixel electrode **120** are aligned in the 45° direction with respect to the absorption axes, but the average alignment azimuth of the liquid crystal molecules on the subpixel electrode **110** is different from the 45° direction with respect to the absorption axes. In more detail, it was found that the angle at which the average alignment azimuth crosses the X direction is larger than 45°.

When the angle of the average alignment direction of the liquid crystal molecules with respect to the absorption axes is shifted from 45° as above, it is difficult to rotate the polarization plane of the incident light by 90° in order to provide white display. As a result, the utilization efficiency of light is decreased. When the alignment directions of the liquid crystal molecules on the subpixel electrode **110** and the alignment directions of the liquid crystal molecules on the subpixel electrode **120** are different from each other, there occurs a difference among the subpixels regarding the azimuthal angle dependence of the V-T characteristic (voltage dependence of the transmittance) and the viewing angle characteristic. As a result, it is difficult to control the characteristics in order to obtain desired display characteristic.

The present invention, made to solve the above-described problems, has an object of providing a liquid crystal display device having a high utilization efficiency of light or a liquid crystal display device having a high viewing angle characteristic.

### SOLUTION TO PROBLEM

According to a first embodiment of the present invention, a liquid crystal display device of a vertical alignment type including a plurality of pixels is provided. The liquid crystal display device includes a first polarizing plate having an absorption axis extending in a first direction; a second polarizing plate having an absorption axis extending in a second direction perpendicular to the first direction; a pixel electrode located in each of the plurality of pixels and including a first subpixel electrode and a second subpixel electrode to which different levels of voltage can be applied; a counter electrode facing the pixel electrode; and a liquid crystal layer provided between the pixel electrodes and the counter electrode. The first subpixel electrode includes a plurality of branch electrodes extending in an identical direction, which is a third direction different from a direction inclined by 45° with respect to the first direction or the second direction is provided.

According to a second embodiment of the present invention based on the first embodiment, the liquid crystal display device, wherein the second subpixel electrode includes a plurality of branch electrodes extending in an identical direction, which is a fourth direction different from the third direction is provided.

According to a third embodiment of the present invention based on the second embodiment, the liquid crystal display device, wherein the fourth direction is different by 45° from the first direction or the second direction is provided.

According to a fourth embodiment of the present invention based on any of the first through third embodiments, the liquid crystal display device, wherein the first subpixel electrode includes a plurality of branch electrodes extending in an identical direction, which is a direction different from a direction inclined by 45° with respect to the first direction or the second direction and also different from the third direction is provided.

According to a fifth embodiment of the present invention based on any of the first through third embodiments, the liquid crystal display device, wherein the first subpixel electrode includes a plurality of branch electrodes extending in a plurality of directions which are different from a direction inclined by 45° with respect to the first direction or the second direction; and when a voltage is applied, a plurality of liquid crystal domains having different alignment directions of liquid crystal molecules from each other are formed by the plurality of branch electrodes extending in the plurality of directions is provided.

According to a sixth embodiment of the present invention based on the fifth embodiment, the liquid crystal display device, wherein the alignment directions of the liquid crystal molecules in the plurality of liquid crystal domains are different by 45° from the first direction or the second direction is provided.

According to a seventh embodiment of the present invention based on any one of the first through sixth embodiments, the liquid crystal display device, wherein a width of the first subpixel electrode in the first direction is different from a width of the first subpixel electrode in the second direction is provided.

According to an eighth embodiment of the present invention based on the seventh embodiment, the liquid crystal display device, wherein the width of the first subpixel electrode in the first direction is larger than the width of the first subpixel electrode in the second direction; and the first direction and the third direction cross each other at an angle larger than 0° and smaller than 45° is provided.

According to a ninth embodiment of the present invention based on the second or third embodiment, the liquid crystal display device, wherein the second subpixel electrode includes a plurality of branch electrodes extending in a direction different from the fourth direction is provided.

According to a 10th embodiment of the present invention based on the second or third embodiment, the liquid crystal display device, wherein the second subpixel electrode includes a plurality of branch electrodes extending in a plurality of directions different from each other; and when a voltage is applied, a plurality of liquid crystal domains having different alignment directions of liquid crystal molecules from each other are formed by the plurality of branch electrodes, of the second subpixel, extending in the plurality of directions is provided.

According to an 11th embodiment of the present invention based on the 10th embodiment, the liquid crystal display device, wherein the alignment directions of the liquid crystal molecules in the plurality of liquid crystal domains are different by 45° from the first direction or the second direction is provided.

According to a 12th embodiment of the present invention based on any one of the second, third, ninth, 10th and 11th embodiments, the liquid crystal display device, wherein a width of the second subpixel electrode in the first direction is equal to a width of the second subpixel electrode in the second direction is provided.

According to a 13th embodiment of the present invention, a liquid crystal display device of a vertical alignment type including a plurality of pixels is provided. The liquid crystal display device includes a first polarizing plate having an absorption axis extending in a first direction; a second polarizing plate having an absorption axis extending in a second direction perpendicular to the first direction; a pixel electrode located in each of the plurality of pixels; a counter electrode facing the pixel electrode; and a liquid crystal layer provided between the pixel electrodes and the counter electrode. A width of the pixel electrode in the first direction is different from a width of the pixel electrode in the second direction; and the pixel electrode includes a plurality of branch electrodes extending in an identical direction, which is a third direction different from a direction inclined by 45° with respect to the first direction or the second direction.

According to a 14th embodiment of the present invention based on the 13th embodiment, the liquid crystal display device, wherein the pixel electrode includes a plurality of branch electrodes extending in an identical direction, which is a direction different from a direction inclined by 45° with respect to the first direction or the second direction and also different from the third direction is provided.

According to a 15th embodiment of the present invention based on the 13th or 14th embodiment, the liquid crystal display device, wherein the pixel electrode includes a plurality of branch electrode extending in a plurality of directions which are different from a direction inclined by 45° with respect to the first direction or the second direction; and when a voltage is applied, a plurality of liquid crystal domains having different alignment directions of liquid crystal molecules from each other are formed by the plurality of branch electrodes extending in the plurality of directions is provided.

According to a 16th embodiment of the present invention based on the 15th embodiment, the liquid crystal display device, wherein the alignment directions of the liquid crystal molecules in the plurality of liquid crystal domains are different by 45° from the first direction or the second direction is provided.

According to a 17th embodiment of the present invention based on any one of the 13th through 16th embodiments, the liquid crystal display device, wherein the width of the pixel electrode in the first direction is larger than the width of the pixel electrode in the second direction; and the first direction and the third direction cross each other at an angle larger than 0° and smaller than 45° is provided.

### ADVANTAGEOUS EFFECTS OF INVENTION

According to the present invention, a liquid crystal display device having a high utilization efficiency of light or a liquid crystal display device having a high display quality with the viewing angle characteristic being preferably controlled is provided.

### BRIEF DESCRIPTION OF DRAWINGS

[FIG. 1] FIG. **1** is a plan view schematically showing a structure of one pixel in a liquid crystal display device **1** in Embodiment 1 according to the present invention.
[FIG. 2] FIG. **2** is a cross-sectional view of the liquid crystal display device 1 taken along line **A-A'** in FIG. **1****.**
[FIG. 3] FIG. **3** is a plan view schematically showing shapes of subpixel electrodes **20a** and **20b** in the liquid crystal display device **1.**
[FIG. 4] FIG. **4** illustrates the alignment of liquid crystal molecules realized by the subpixel electrodes **20a** and **20b.**
[FIG. 5] FIG. **5** illustrates an effect provided by the liquid crystal display device **1** and shows the azimuthal angle dependence of the viewing angle characteristic.
[FIG. 6] FIG. **6** is a plan view schematically showing a structure of pixels in a liquid crystal display device 2 in Embodiment 2 according to the present invention.
[FIG. 7] FIG. **7** is a plan view schematically showing a shape of a pixel electrode **40** in the liquid crystal display device **2.**
[FIG. 8] FIG. **8** is a plan view schematically showing shapes of subpixel electrodes **110** and **120** in the liquid crystal display device **100** in a reference example.

### DESCRIPTION OF EMBODIMENTS

Hereinafter, structures of liquid crystal display devices in embodiments according to the present invention will be described, but the present invention is not limited to the embodiments described below.

### (EMBODIMENT 1)

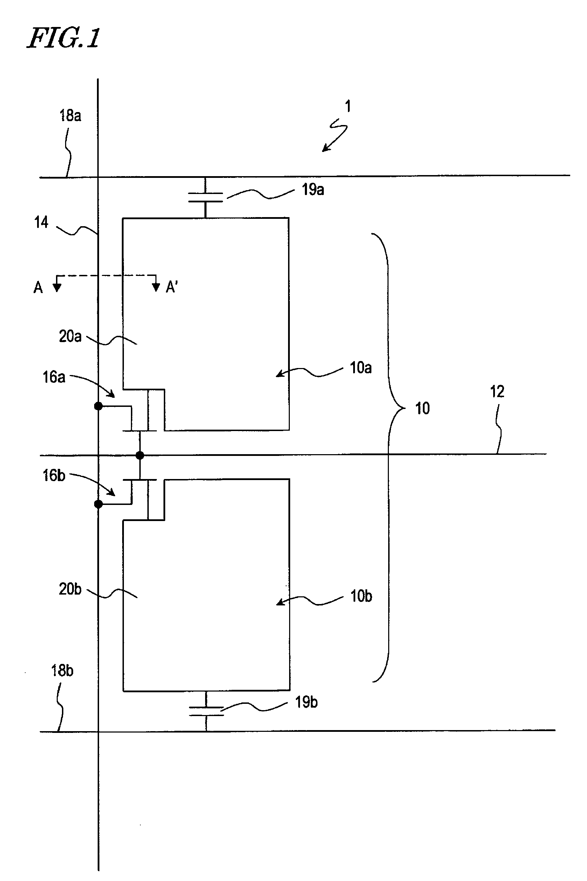

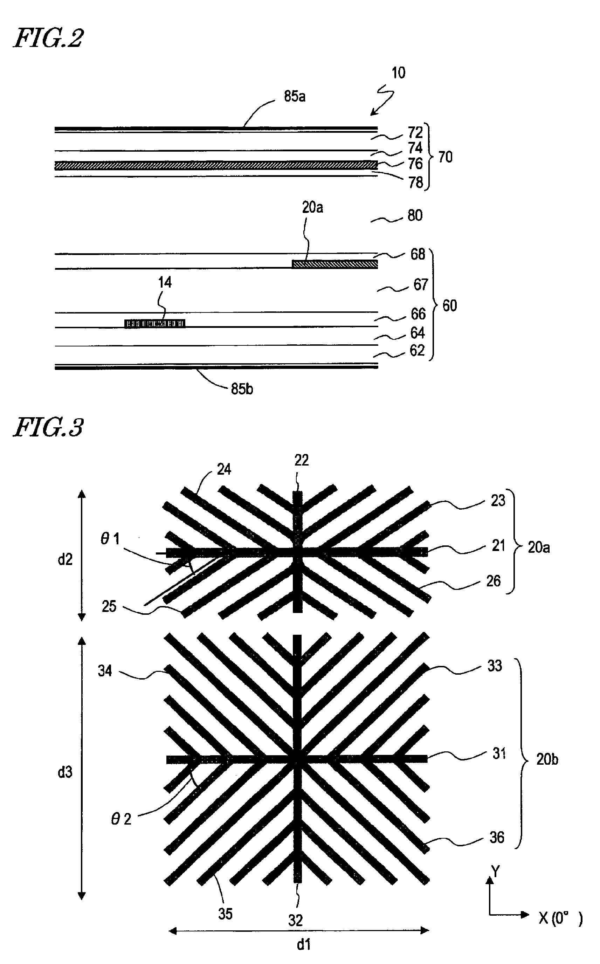

FIG. **1** is a plan view schematically showing a structure of one pixel **10** in a liquid crystal display device **1** in Embodiment 1 according to the present invention. FIG. **2** is a cross-sectional view of the liquid crystal display device **1** taken along line **A-A'** in FIG. **1****.**

The liquid crystal display device **1** is of a vertical alignment type and includes a plurality of pixels **10,** each having a structure shown in FIG. **1****,** which are arranged in a matrix in an X direction (left-right direction in the figure) and a Y direction (top-bottom direction in the figure). The liquid crystal display device **1** provides display in a normally black mode by the pixels **10.** A minimum display unit is formed of three primary colors of R (red), G (green) and B (blue), and each pixel **10** corresponds to a display area of one color among R, G and B. Three pixels **10** continuously placed in the X direction or the Y direction correspond to three pixels of R, G and B. The minimum display unit is formed of these three pixels **10.** The minimum display unit may be formed of four or more primary colors (multiple primary color display). In such a case, each pixel **10** corresponds to a display area of one color among a plurality of primary colors which form the minimum display unit.

The pixel **10** includes two subpixels **10a** and **10b.** The pixel **10** may include three or more subpixels. The subpixel **10a** includes a TFT **16a** and a fishbone-type subpixel electrode (first subpixel electrode) **20a,** and the subpixel **10b** includes a TFT **16b** and a fishbone-type subpixel electrode (second subpixel electrode) **20b.** The subpixel electrode **20a** and **20b** will be occasionally referred to simply as the "pixel electrode **20a"** and the "pixel electrode **20b".**

As shown in FIG. **2****,** the liquid crystal display device **1** includes a TFT substrate **60,** which is an active matrix substrate, a counter substrate **70,** which is a color filter substrate, and a liquid crystal layer **80** provided between the substrates. The liquid crystal layer **80** contains a nematic liquid crystal material having a negative dielectric anisotropy (Δε < 0).

A polarizing plate (first polarizing plate) **85b** is provided outer to the TFT substrate **60** (a surface of the TFT substrate **60** on the side opposite to the liquid crystal layer **80**), and a polarizing plate (second polarizing plate) **85a** is provided outer to the counter substrate **70.** The polarizing plates **85a** and **85b** are placed in crossed Nicols. The absorption axis of one of the polarizing plates extends in the X direction (first direction), and the absorption axis of the other polarizing plate extends in the Y direction (second direction). In the following description, the azimuth directed from left to right in FIG. **1** is referred to as the "0° azimuth", and azimuthal angles are defined counterclockwise in the plane of the substrates based on the 0° azimuth. The polarizing plates **85a** and **85b** may be placed such that the absorption axes thereof are perpendicular to each other and each absorption axis is different from the X direction or the Y direction by 0°, 90°, 180° or 270°.

As shown in FIG. **1** and FIG. **2****,** the TFT substrate **60** includes a glass plate (transparent plate) **62,** and the following elements sequentially formed on the glass plate **62:** a gate insulating film **64,** an insulating layer **66,** a resin layer (insulating layer) **67,** and an alignment film (vertical alignment film) **68.** Between the glass plate **62** and the gate insulating film **64,** scanning lines (gate bus lines) **12** and storage capacitance lines (Cs lines) **18a** and **18b** are formed. Between the gate insulating film **64** and the insulating layer **66** (or in the insulating layer **66),** the TFTs **16a** and **16b** and signal lines (source bus lines) **14** are formed. On the resin layer **67,** the subpixel electrodes **20a** and **20b** are formed. The alignment film **68** covers the subpixel electrodes **20a** and **20b.**

Source electrodes of the TFTs **16a** and **16b** are connected to the signal line **14** extending in the Y direction. Drain electrodes of the TFTs **16a** and **16b** are respectively connected to the subpixel electrodes **20a** and **20b** via contact holes (not shown). Gate electrodes of the TFTs **16a** and **16b** are connected to the scanning line **12** extending in the X direction between the subpixels **10a** and **10b.** Alternatively, the TFTs **16a** and **16b** may be each provided with a scanning line and the gate electrodes of the TFTs **16a** and **16b** may be connected to the respective scanning lines.

Between the subpixel electrode **20a** and the storage capacitance line **18a** and between the subpixel electrode **20b** and the storage capacitance line **18b,** storage capacitances **19a** and **19b** are respectively formed. By supplying different levels of voltage to the storage capacitance lines **18a** and **18b,** the subpixel electrodes **20a** and **20b** are supplied with different levels of voltage. Owing to this, the transmittance or the γ characteristic provided by the subpixel **10a** can be made different from that provided by the subpixel **10b.** Thus, display having a high viewing characteristic can be provided. Alternatively, the subpixel electrodes **20a** and **20b** may be each provided with a signal line so that the voltage applied to the subpixel electrode **20a** can be different from the voltage applied to the subpixel electrode **20b.**

As shown in FIG. **2****,** the counter substrate **70** includes a transparent plate **72,** a CF (color filter) layer **74** provided on the transparent plate **72** (on a surface of the transparent plate **72** on the liquid crystal layer side), a counter electrode (common electrode) **76** formed on the CF layer **74,** and an alignment film (vertical alignment film) **78** formed on the counter electrode **76.**

The alignment film **68** of the TFT substrate **60** and the alignment film **78** of the counter substrate **70** both include an alignment layer and an alignment sustaining layer. The alignment layer is a vertical alignment layer formed by application of a material thereof on the substrate, and the alignment sustaining layer is formed of a polymer, which is formed as follows. After a liquid crystal cell (cell including the TFT substrate **60,** the counter substrate **70** and the liquid crystal layer **80)** is formed, a photopolymerizable monomer mixed in the liquid crystal material in advance is photopolymerized in the state where a voltage is applied to the liquid crystal layer **80.** The monomer is polymerized as follows. A voltage is supplied to the liquid crystal layer **80** by the subpixel electrodes **20a** and **20b** and the counter electrode **76,** and the liquid crystal molecules are aligned by an oblique electric field generated in accordance with the shapes of the subpixel electrodes **20a** and **20b.** The liquid crystal layer **80** is irradiated with light in this state to polymerize the monomer.

Owing to the alignment sustaining layers formed in this manner, the alignment (pretilt azimuths) of the liquid crystal molecules can be maintained (stored) even after the voltage is removed (in the absence of the voltage). Such a method of forming the alignment film is referred to as the "PSA (Polymner Sustained Alignment)" technology. The alignment sustaining layer has a function of pretilting the alignment directions of liquid crystal molecules to directions slightly inclined with respect to the direction vertical to the substrate plane in the case where no voltage is applied to the liquid crystal layer during display. In another embodiment, the alignment films **68** and **78** include only the vertical alignment film with no alignment sustaining layer.

Now, with reference to FIG. **3****,** the shapes of the subpixel electrode **20a** and **20b** will be described.

As shown in FIG. **3****,** the subpixel electrode **20a** includes a trunk electrode **21** (trunk portion of the subpixel electrode) extending in the X direction (direction of 0°-180° in azimuthal angle), a trunk electrode **22** extending in the Y direction (direction of 90°-270° in azimuthal angle), and also a plurality of branch electrodes **23,** a plurality of branch electrodes **24,** a plurality of branch electrodes **25** and a plurality of branch electrodes **26** which extend from the trunk electrode **21** or **22.** The branch electrodes **23** extend in a direction of azimuthal angle which is larger than 0° and smaller than 90° (not including 45°). The branch electrodes **24** extend in a direction of azimuthal angle which is larger than 90° and smaller than 180° (not including 135°). The branch electrodes **25** extend in a direction of azimuthal angle which is larger than 180° and smaller than 270° (not including 225°). The branch electrodes **26** extend in a direction of azimuthal angle which is larger than 270° and smaller than 360° (not including 315°).

In this embodiment, the directions in which the branch electrodes **23, 24, 25** and **26** extend are respectively 42.5°, 137.5°, 225.5° and 317.5°. Namely, angle (acute angle) θ1 at which the branch electrodes **23, 24, 25** and **26** each cross the X direction is 42.5°. As can be seen, the branch electrodes **23, 24, 25** and **26** each extend in a direction (third direction) which is different from a direction inclined by 45° with respect to the X direction or the Y direction. Width **d1** in the X direction of the subpixel electrode **20a** (distance between the rightmost end and the leftmost end in the figure) is 150 µm, and width **d2** in the Y direction of the subpixel electrode **20a** (distance between the topmost end and the bottommost end in the figure; d1/3) is 50 µm.

The subpixel electrode **20b** includes a trunk electrode **31** extending in the X direction, a trunk electrode **32** extending in the Y direction, and also a plurality of branch electrodes **33,** a plurality of branch electrodes **34,** a plurality of branch electrodes **35** and a plurality of branch electrodes **36** which extend from the trunk electrode **31** or **32.** The directions in which the branch electrodes **33, 34, 35** and **36** extend are respectively 45°, 135°, 225° and 315°. Namely, angle (acute angle) θ2 at which the branch electrodes **33, 34, 35** and **36** each cross the X direction is 45°. A width in the X direction of the subpixel electrode **20b** is equal to that of the subpixel electrode **20a,** i.e., **d1,** and width **d3** in the Y direction of the subpixel electrode **20b** is also equal to **d1.**

As can be seen, the branch electrodes **33** through **36** of the subpixel electrode **20b** extend in different directions from those of the branch electrodes **23** through **26** of the subpixel electrode **20a.** The ratio of the width **d1** and the width **d3** may be other than 1:1. In accordance with the ratio, the branch electrodes **33, 34, 35** and **36** may extend in directions which are different from a direction inclined by 45° with respect to the X direction or the Y direction and are also different from the directions in which the branch electrodes **23, 24, 25** and **26** extend. Alternatively, the branch electrodes **33, 34, 35** and **36** may respectively extend in the same directions as the branch electrodes **23, 24, 25** and **26.**

Because of such shapes of the subpixel electrodes **20a** and **20b,** every two adjacent branch electrodes of the branch electrodes **23** through **26** and **33** through **36** have, therebetween, a slit (gap with no electrode material) extending in the same direction as the two branch electrodes.

The branch electrodes **23** through **26** and **33** through **36** have substantially the same width, and all the slits have substantially the same width. The "width of the branch electrode" means the width thereof in a direction vertical to the direction in which the branch electrode extends. The "width of the slit" means the width thereof in a direction vertical to the direction in which the slit extends. When the width of the branch electrode and the width of the slit are excessively large or small, an alignment control force does not appropriately function. Therefore, it is desirable that the width of each branch electrode is in the range of 1.5 µm or greater and 5.0 µm or less, and that the width of each slit is in the range of 1.5 µm or greater and 5.0 µm or less.

By the action of the subpixel electrodes **20a** and **20b** having the above-described shapes and the alignment films **68** and **78,** 4D-structure multidomains are formed in each of the subpixels **10a** and **10b.** In the absence of an applied voltage, the liquid crystal molecules in the four domains are pretilted in directions slightly inclined with respect to the direction vertical to the substrate plane. The pretilt azimuths are the azimuths stored in the alignment films **68** and **78,** which are inclined by 45° with respect to the X direction or the Y direction. When a voltage is applied, the liquid crystal molecules in the four domains are aligned such that the directions of the polar angles thereof are closer to a direction parallel to the substrate plane. The azimuths of the alignment are substantially the same as the pretilt azimuths. Since the azimuths of the alignment match the pretilt azimuths, alignment in accurate azimuths can be realized at a very high response speed.

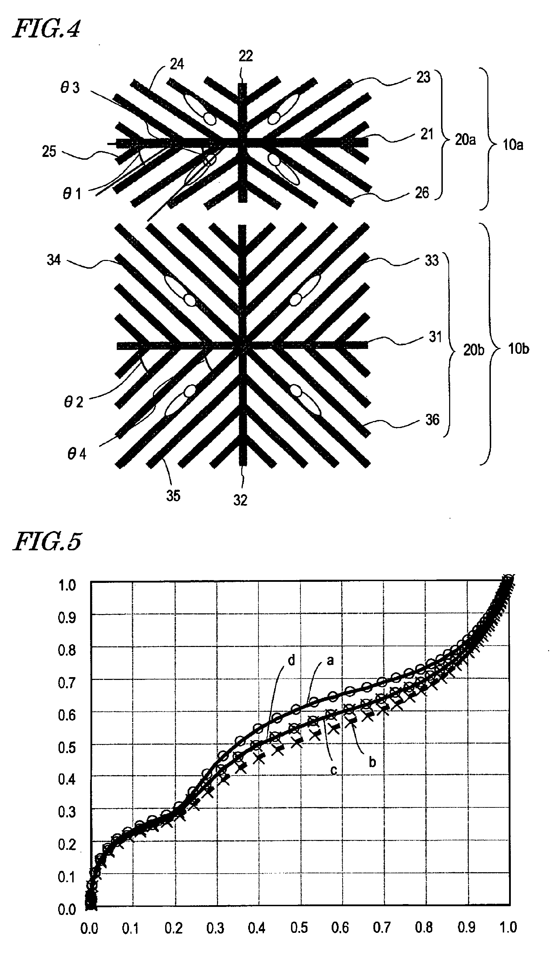

FIG. **4** illustrates the alignment of the liquid crystal molecules in the liquid crystal display device **1.**

As shown in FIG. **4****,** the width of the subpixel electrode **20b** in the X direction is equal to the width thereof in the Y direction, and all of the branch electrodes **33** through **36** extend in directions of azimuthal angle of 45° with respect to the X direction (or the Y direction). Therefore, when a voltage is applied to the liquid crystal molecules by the subpixel electrodes **20a** and **20b,** the liquid crystal molecules in the subpixel **10b** are aligned in the directions in which the branch electrodes **33** through **36** extend, i.e., in directions of azimuthal angle of 45° (θ4) with respect to the X direction.

The liquid crystal molecules in the subpixel **10a** are aligned as follows. The width **d1** of the subpixel electrode **20a** in the X direction is different from the width **d2** thereof in the Y direction. Therefore, if the branch electrodes **23** through **26** extended in directions inclined by 45° with respect to the X direction, when a voltage is applied to the liquid crystal molecules, the liquid crystal molecules in the subpixel **10a** would be aligned in directions of azimuthal angles which are not 45° with respect to the X direction as described above with reference to FIG. **8****.** This is considered to occur for the following reason. In the vicinity of the topmost end and the bottommost end of the pixel electrode **20a,** there is a force acting to align the liquid crystal molecules along the Y direction; in the vicinity of the rightmost end and the leftmost end of the pixel electrode **20a,** there is a force acting to align the liquid crystal molecules along the X direction; and the width **d1** of the subpixel electrode **20a** in the X direction is larger than the width **d2** thereof in the Y direction. Therefore, the force in the vicinity of the ends of the subpixel electrode **20a** for aligning the liquid crystal molecules along the X direction is weaker than the force in the vicinity of the ends of the subpixel electrode **20a** for aligning the liquid crystal molecules along the Y direction. Influenced by such unbalanced alignment control forces, many of the liquid crystal molecules in the subpixel **10a** are aligned in directions of azimuthal angles which are not 45° with respect to the X direction.

However, according to the present invention, the branch electrodes **23** through **26** of the subpixel electrode **20a** are formed to extend in directions of azimuthal angles which are not 45° with respect to the X direction (or the Y direction) in consideration of such unbalanced alignment control forces acting in the X direction and the Y direction. Therefore, when a voltage is applied to the liquid crystal molecules in the subpixel **10a,** the liquid crystal molecules can be aligned in directions of azimuthal angle of 45° (θ3) with respect to the X direction.

In the case where the width **d1** of the subpixel electrode **20a** in the X direction is larger than the width **d2** thereof in the Y direction, it is preferable that the angle (acute angle: θ1) made by the directions in which the branch electrodes **23** through **26** extend and the X direction is smaller than 45°. In the case where the width of the subpixel electrode **20a** in the X direction is smaller than the width thereof in the Y direction, it is preferable that the angle (acute angle: θ1) made by the directions in which the branch electrodes **23** through **26** extend and the X direction is larger than 45°.

The above-described unbalanced alignment control forces acting in the X direction and the Y direction have a larger influence on the entire liquid crystal molecules in the pixel as the size of the pixel is smaller. Accordingly, forming the subpixel electrode **20a,** such that the branch electrodes extend in directions of azimuthal angles which are not 45° with respect to the X direction, is more effective for a liquid crystal display device having a relatively small pixel size, for example, a liquid crystal display device in which the width **d2** (smaller width) of the subpixel electrode is 50 µm or less.

FIG. **5** illustrates an effect provided by use of the subpixel electrodes **20a** and **20b,** and compares the viewing angle characteristic of the liquid crystal display device 1 against the viewing angle characteristic of the liquid crystal display device **100** using the subpixel electrodes **110** and **120** shown in FIG. **8****.**

In the graph of the figure, the horizontal axis represents the transmittance (where the maximum transmittance is 1.0) provided in the case where the liquid crystal display device is seen from the front (direction having the polar angle of 90° with respect to the substrate plane), and the vertical axis represents the transmittance (where the maximum transmittance is 1.0) provided in the case where the liquid crystal display device is seen from a direction having the polar angle of 60°. In the figure, "a" (line connecting ○) and "b" (line connecting × ) respectively represent the viewing angle characteristics (relationship between the transmittance when seen from the front and the transmittance when seen in the direction having the polar angle of 60°) of the liquid crystal display device **100** along the X direction and the Y direction. "c" (line connecting ○) and "d" (line connecting × ) respectively represent the viewing angle characteristics of the liquid crystal display device 1 along the X direction and the Y direction.

As shown in FIG. **5****,** "a" and "b" represent different viewing angle characteristics, whereas "c" and "d" represent substantially the same viewing angle characteristics. This means that in the liquid crystal display device **100,** the viewing angle characteristic (polar angle dependence of the luminance) in the Y direction is different from the viewing angle characteristic in the X direction; whereas in the liquid crystal display device **1,** substantially the same viewing angle characteristic is obtained in the X direction and the Y direction, namely, the viewing angle characteristic having a low azimuthal angle dependence is obtained.

As described above, in the liquid crystal display device **1,** the liquid crystal molecules in the pixel **10** can be stably aligned in directions inclined by 45° with respect to the X direction and the Y direction, namely, the absorption axes of the polarizing plates. Therefore, high quality display having a high utilization efficiency of light can be provided. In addition, the azimuthal angle dependence of the viewing angle characteristic in the liquid crystal display device including a plurality of subpixels can be made more uniform, and so high quality display can be provided.

### (EMBODIMENT 2)

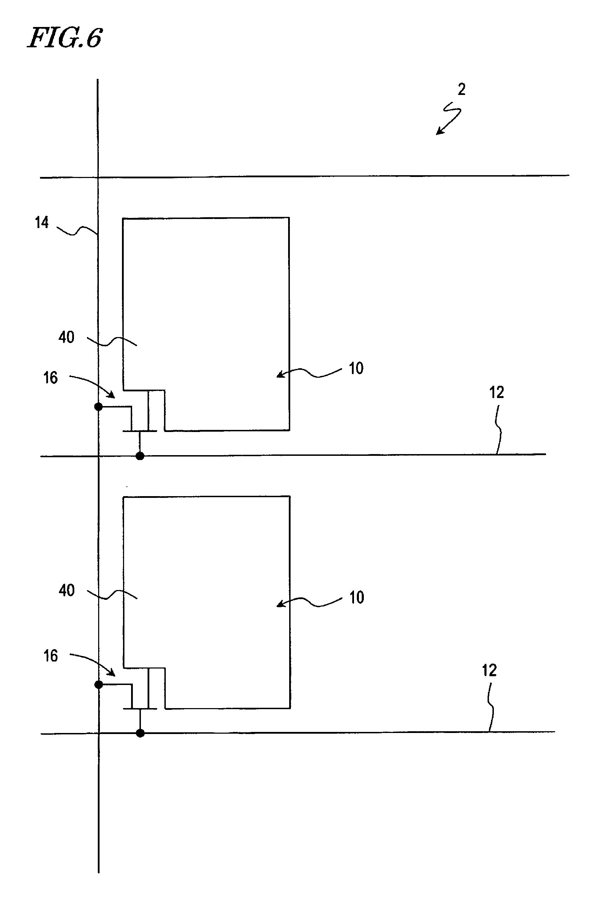

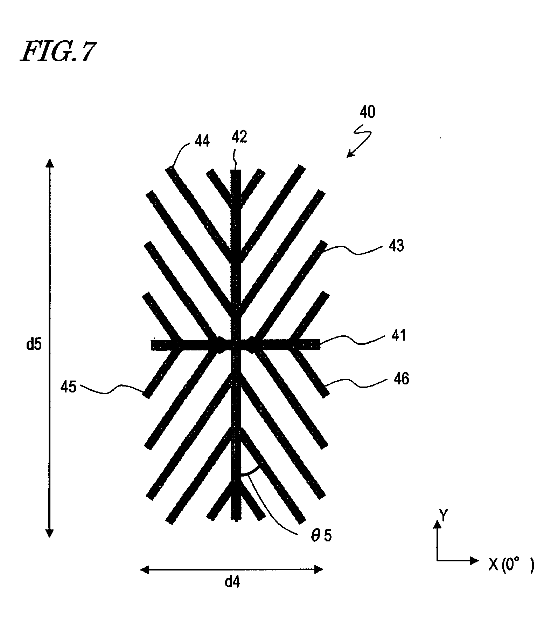

FIG. **6** is a plan view schematically showing a structure of a pixel **10** in a liquid crystal display device **2** in Embodiment 2 according to the present invention. FIG. **7** is a plan view schematically showing a shape of one pixel electrode **40** in the liquid crystal display device **2.**

The liquid crystal display device **2** has basically the same structure as the liquid crystal display device **1** except for the shape of the pixels and the pixel electrodes. Thus, the liquid crystal display device **2** will be described mainly regarding the differences from the liquid crystal display device **1.** Elements identical to those of the liquid crystal display device **1** will be represented by the identical reference signs thereto and many of the descriptions thereof will be omitted.

As shown in FIG. **6****,** the liquid crystal display device **2** is of a vertical type and includes a plurality of pixels **10** which are arranged in a matrix in an X direction (left-right direction in the figure) and a Y direction (top-bottom direction in the figure). The liquid crystal display device **2** provides display in a normally black mode by the pixels **10.** A minimum display unit is formed of three primary colors of R (red), G (green) and B (blue), and each pixel **10** corresponds to a display area of one color among R, G and B. The cross-sectional structure of the liquid crystal display device **2** is the same as that shown in FIG. **2** except that the subpixel electrode **20a** is replaced with the pixel electrode **40.**

Each pixel **10** includes a TFT **16** and the fishbone-type pixel electrode **40.** The source electrode of the TFT **16** is connected to the signal line **14,** the drain electrode of the TFT **16** is connected to the pixel electrode **40,** and the gate electrode of the TFT **16** is connected to the scanning line **12.**

Now, with reference to FIG. **7****,** the shape of the pixel electrode **40** will be described. The shape of the pixel electrode **40** is basically the same as the shape of the subpixel electrode **20a** in Embodiment 1 (except that the width of the pixel electrode **40** in the X direction is shown to be smaller than the width thereof in the Y direction).

As shown in FIG. **7****,** the pixel electrode **40** includes a trunk electrode (trunk portion of the pixel electrode) **41** extending in the X direction, a trunk electrode **42** extending in the Y direction, and also a plurality of branch electrodes **43,** a plurality of branch electrodes **44,** a plurality of branch electrodes **45** and a plurality of branch electrodes **46** which extend from the trunk electrode **41** or **42.** The branch electrodes **43** extend in a direction of azimuthal angle which is larger than 0° and smaller than 90° (not including 45°). The branch electrodes **44** extend in a direction of azimuthal angle which is larger than 90° and smaller than 180° (not including 135°). The branch electrodes **45** extend in a direction of azimuthal angle which is larger than 180° and smaller than 270° (not including 225°). The branch electrodes **46** extend in a direction of azimuthal angle which is larger than 270° and smaller than 360° (not including 315°).

In this embodiment, the directions in which the branch electrodes **43, 44, 45** and **46** extend are respectively 47.5°, 132.5°, 227.5° and 312.5°. Namely, angle (acute angle) θ5 at which the branch electrodes **43, 44, 45** and **46** each cross the Y direction is 42.5°. As can be seen, the branch electrodes **43, 44, 45** and **46** each extend in a direction (third direction) which is different from a direction inclined by 45° with respect to the X direction or the Y direction. Width **d4** in the X direction of the pixel electrode **40** (distance between the rightmost end and the leftmost end in the figure) is 150 µm, and width **d5** in the Y direction of the pixel electrode **40** (distance between the topmost end and the bottommost end in the figure) is 450 µm.

Because of such a shape of the pixel electrode **40,** every two adjacent branch electrodes of the branch electrodes **43** through **46** have, therebetween, a slit extending in the same direction as the two branch electrodes. The branch electrodes have substantially the same width, and all the slits have substantially the same width. It is desirable that the width of each branch electrode is in the range of 1.5 µm or greater and 5.0 µm or less, and that the width of each slit is in the range of 1.5 µm or greater and 5.0 µm or less.

By the action of the pixel electrode **40** having the above-described shape and the alignment films, 4D-structure multidomains are formed in each of the pixels **10.** Like the branch electrodes **23** through **26** in Embodiment 1, the branch electrodes **43** through **46** of the pixel electrode **40** are formed to extend in directions of azimuthal angles which are not 45° with respect to the X direction (or the Y direction) in consideration of unbalanced alignment control forces acting in the X direction and the Y direction. Therefore, when a voltage is applied to the liquid crystal molecules in the pixel **10,** the liquid crystal molecules can be aligned in directions of azimuthal angle of 45° (θ3) with respect to the X direction. In the case where the width **d4** of the pixel electrode **40** in the X direction is smaller than the width **d5** thereof in the Y direction, it is preferable that the angle (acute angle: θ5) made by the directions in which the branch electrodes **43** through **46** extend and the Y direction is smaller than 45°.

The above-described unbalanced alignment control forces acting in the X direction and the Y direction have a larger influence on the entire liquid crystal molecules in the pixel as the size of the pixel is smaller. Accordingly, forming the pixel electrode **40,** such that the branch electrodes extend in directions of azimuthal angles which are not 45° with respect to the X direction, is more effective for a liquid crystal display device having a relatively small pixel size, for example, a liquid crystal display device in which the width **d4** (smaller width) of the pixel electrode **40** is 150 µm or less.

In the liquid crystal display device **2,** the liquid crystal molecules in the pixel **10** can be stably aligned in directions inclined by 45° with respect to the X direction and the Y direction, namely, the absorption axes of the polarizing plates. Therefore, high quality display having a high utilization efficiency of light can be provided.

### INDUSTRIAL APPLICABILITY

The present invention is usable to improve the display characteristic of various types of liquid crystal display devices, and is especially preferably usable for a liquid crystal display device having relatively small pixels.

### REFERENCE SIGNS LIST

- **1, 2**: Liquid crystal display device
- **10**: Pixel
- **10a, 10b**: Subpixel
- **12**: Scanning line
- **14**: Signal line
- **16, 16a, 16b**: TFT
- **18a, 18b**: Storage capacitance line
- **19a, 19b**: Storage capacitance
- **20a, 20b**: Subpixel electrode
- **21, 22, 31, 32, 41, 42**: Trunk electrode
- **23-26, 33-36, 43-46**: Branch electrode
- **40**: Pixel electrode
- **60**: TFT substrate
- **62**: Glass plate
- **64**: Gate insulating film
- **66**: Insulating layer
- **67**: Resin layer
- **68**: Alignment film
- **70**: Counter substrate
- **72**: Transparent plate
- **74**: CF layer
- **76**: Counter electrode
- **78**: Alignment film
- **80**: Liquid crystal layer
- **85a, 85b**: Polarizing plate

## Claims

1. A liquid crystal display device of a vertical alignment type including a plurality of pixels, the liquid crystal display device comprising:
a first polarizing plate having an absorption axis extending in a first direction;
a second polarizing plate having an absorption axis extending in a second direction perpendicular to the first direction;
a pixel electrode located in each of the plurality of pixels and including a first subpixel electrode and a second subpixel electrode to which different levels of voltage can be applied;
a counter electrode facing the pixel electrode; and
a liquid crystal layer provided between the pixel electrodes and the counter electrode;
wherein the first subpixel electrode includes a plurality of branch electrodes extending in an identical direction, which is a third direction different from a direction inclined by 45° with respect to the first direction or the second direction.

2. The liquid crystal display device of claim 1, wherein the second subpixel electrode includes a plurality of branch electrodes extending in an identical direction, which is a fourth direction different from the third direction.

3. The liquid crystal display device of claim 2, wherein the fourth direction is different by 45° from the first direction or the second direction.

4. The liquid crystal display device of any one of claims 1 through 3, wherein the first subpixel electrode includes a plurality of branch electrodes extending in an identical direction, which is a direction different from a direction inclined by 45° with respect to the first direction or the second direction and also different from the third direction.

5. The liquid crystal display device of any one of claims 1 through 3, wherein:
the first subpixel electrode includes a plurality of branch electrodes extending in a plurality of directions which are different from a direction inclined by 45° with respect to the first direction or the second direction; and
when a voltage is applied, a plurality of liquid crystal domains having different alignment directions of liquid crystal molecules from each other are formed by the plurality of branch electrodes extending in the plurality of directions.

6. The liquid crystal display device of claim 5, wherein the alignment directions of the liquid crystal molecules in the plurality of liquid crystal domains are different by 45° from the first direction or the second direction.

7. The liquid crystal display device of any one of claims 1 through 6, wherein a width of the first subpixel electrode in the first direction is different from a width of the first subpixel electrode in the second direction.

8. The liquid crystal display device of claim 7, wherein:
the width of the first subpixel electrode in the first direction is larger than the width of the first subpixel electrode in the second direction; and
the first direction and the third direction cross each other at an angle larger than 0° and smaller than 45°.

9. The liquid crystal display device of claim 2 or 3, wherein the second subpixel electrode includes a plurality of branch electrodes extending in a direction different from the fourth direction.

10. The liquid crystal display device of claim 2 or 3, wherein:
the second subpixel electrode includes a plurality of branch electrodes extending in a plurality of directions different from each other; and
when a voltage is applied, a plurality of liquid crystal domains having different alignment directions of liquid crystal molecules from each other are formed by the plurality of branch electrodes, of the second subpixel, extending in the plurality of directions.

11. The liquid crystal display device of claim 10, wherein the alignment directions of the liquid crystal molecules in the plurality of liquid crystal domains are different by 45° from the first direction or the second direction.

12. The liquid crystal display device of any one of claims 2, 3, 9, 10 and 11, wherein a width of the second subpixel electrode in the first direction is equal to a width of the second subpixel electrode in the second direction.

13. A liquid crystal display device of a vertical alignment type including a plurality of pixels, the liquid crystal display device comprising:
a first polarizing plate having an absorption axis extending in a first direction;
a second polarizing plate having an absorption axis extending in a second direction perpendicular to the first direction;
a pixel electrode located in each of the plurality of pixels;
a counter electrode facing the pixel electrode; and
a liquid crystal layer provided between the pixel electrodes and the counter electrode;
wherein:
a width of the pixel electrode in the first direction is different from a width of the pixel electrode in the second direction; and
the pixel electrode includes a plurality of branch electrodes extending in an identical direction, which is a third direction different from a direction inclined by 45° with respect to the first direction or the second direction.

14. The liquid crystal display device of claim 13, wherein the pixel electrode includes a plurality of branch electrodes extending in an identical direction, which is a direction different from a direction inclined by 45° with respect to the first direction or the second direction and
also different from the third direction.

15. The liquid crystal display device of claim 13 or 14, wherein:
the pixel electrode includes a plurality of branch electrode extending in a plurality of directions which are different from a direction inclined by 45° with respect to the first direction or the second direction; and
when a voltage is applied, a plurality of liquid crystal domains having different alignment directions of liquid crystal molecules from each other are formed by the plurality of branch electrodes extending in the plurality of directions.

16. The liquid crystal display device of claim 15, wherein the alignment directions of the liquid crystal molecules in the plurality of liquid crystal domains are different by 45° from the first direction or the second direction.

17. The liquid crystal display device of any one of claims 13 through 16, wherein:
the width of the pixel electrode in the first direction is larger than the width of the pixel electrode in the second direction; and
the first direction and the third direction cross each other at an angle larger than 0° and smaller than 45°.
